# EUROPÄISCHE PATENTSCHRIFT

(11) **EP 3 180 541 B1**
(45) Veröffentlichungstag und Bekanntmachung des Hinweises auf die Patenterteilung: **26.12.2018**
(21) Anmeldenummer: 15763498.1
(22) Anmeldetag: 10.08.2015
(51) Int. Cl.: F16F 1/38

(54) **VERFAHREN ZUR MONTAGE EINES AGGREGATLAGERS**
METHOD FOR MOUNTING A MOUNTING UNIT
PROCÉDÉ DE MONTAGE D'UN PALIER AGRÉGÉ

(30) Priorität: 13.08.2014 DE 102014216070
(43) Veröffentlichungstag der Anmeldung: 21.06.2017
(73) Patentinhaber: BOGE Elastmetall GmbH, 49401 Damme (DE); VOLKSWAGEN AG, 38440 Wolfsburg (DE)
(72) Erfinder: SCHARF, Jörg, 65558 Eppenrod (DE); JACKE, Maren, 38442 Wolfsburg (DE); MARTIN, Jens, 29399 Wahrenholz (DE)
(74) Vertreter: Bossmeyer, Jörg Peter
(86) Internationale Anmeldenummer: PCT/EP2015/068351
(87) Internationale Veröffentlichungsnummer: WO 2016/023859

(56) Entgegenhaltungen:
- DE-A1-102010 043 165
- DE-A1-102012 106 064
- DE-A1-102012 110 480
- US-A- 5 123 625

## Beschreibung

Die Erfindung betrifft ein Verfahren zur Montage eines Aggregatlagers. Aggregatlager für Kraftfahrzeuge sind in vielerlei Ausgestaltungen bekannt. Über Aggregatlager lassen sich Aggregate wie beispielsweise ein Verbrennungsmotor, ein Gangwahlgetriebe oder eine Motor-Getriebeeinheit schwingungsdämpfend an eine Fahrzeugkarosserie oder einen Achsträger, der auch als Hilfsrahmen bezeichnet wird, anbinden. Dazu weisen derartige Aggregatlager einen starr an das zu dämpfende Aggregat befestigten Tragarm auf, der in ein starr mit der Fahrzeugkarosserie verbundenes Gehäuse eingreift, welches das dem Aggregat abgewandte Ende des Tragarms umgibt. Dieser in dem Gehäuse angeordnete Endabschnitt des Tragarms und das Gehäuse selbst berühren sich nicht unmittelbar, sondern sind durch schwingungsdämpfendes Elastomermaterial, das zwischen den beiden Bauteilen angeordnet ist, voneinander getrennt. Das Elastomermaterial dient dabei im Zusammenspiel mit korrespondierenden Anschlagflächen an Innenseiten des Gehäuses neben der Schwingungsdämpfung auch der Begrenzung von Bewegungsamplituden des zu dämpfenden Aggregats. Zur schwingungsdämpfenden Aufnahme der senkrecht wirkenden Gewichtskraft des Aggregats, die über den Tragarm in das Gehäuse eingeleitet wird, ist bei Aggregatlagern häufig innerhalb des Gehäuses zusätzlich zu dem vorgenannten Elastomermaterial eine elastomere Tragfeder angeordnet, die im Wesentlichen als Würfel oder als Quader ausgebildet ist und den Tragarm an dessen innerhalb des Gehäuses angeordneten Endabschnitt unterstützt. Der Tragarm erstreckt sich üblicherweise in einer Fahrzeugquerrichtung. Aggregatlager sind in einem Kraftfahrzeug häufig paarweise als Lagereinheit angeordnet, wobei ein erstes der beiden Aggregatlager als sogenanntes Festlager und das andere als sogenanntes Loslager ausgebildet ist. Das Gehäuse eines derartigen Festlagers stellt für den in dem Gehäuse angeordneten Endabschnitt des Tragarms Anschlagfächen in der Fahrzeugquerrichtung, einer Fahrzeughochrichtung und in einer Fahrzeuglängsrichtung, deren positive Orientierung in der Regel einer Fahrtrichtung entspricht, bereit. Um eine Wärmeausdehnung des zu dämpfenden Aggregats aufnehmen zu können, ist ein zweites Lager einer solchen Lagereinheit häufig als Loslager ausgebildet, welches von seinem Aufbau her im Wesentlichen dem des Festlagers entspricht. Allerdings lässt das Loslager im Gegensatz zu dem vorgenannten Festlager Bewegungen in einer der zuvor aufgezählten drei Richtungen zu. Dies ist in der Regel die Fahrzeugquerrichtung, wobei Bewegungen in dieser Richtung sowohl in positiver als auch in negativer Orientierung erfolgen können.

Aus der DE 10 2010 043 165 A1 ist ein als Festlager ausgebildetes Aggregatlager mit einem einteiligen, aber nicht einstückigen, Blechgehäuse bekannt, wobei das Blechgehäuse aus zwei Gehäuseteilen besteht, die durch Schweißen oder Löten gefügt sind. Das Fügen der beiden Gehäuseteile zu einem einteiligen Blechgehäuse erfolgt dabei vor dem Einsetzen der elastomeren Tragfeder und der sich daran anschließenden Montage des Tragarms. Das Blechgehäuse weist in drei zueinander orthogonalen Erstreckungsrichtungen jeweils paarweise als Anschlagflächen ausgebildete Wegbegrenzungen auf, um bei Schwingungsbelastungen die Relativbewegung des Tragarms gegenüber dem Blechgehäuse zu begrenzen, wobei die Begrenzung jeweils sowohl für Bewegungen mit positiver Orientierung als auch für Bewegungen mit negativer Orientierung bezüglich der jeweiligen Erstreckungsrichtung vorgesehen ist. Das Blechgehäuse weist darüber hinaus eine schwertförmig ausgebildete Zunge auf, die durch eine in das Innere des Blechgehäuses hineinragende Abkantung eines Wandabschnitts des Blechgehäuses gebildet ist. Die Bewegungsbegrenzung in einer der Erstreckungsrichtungen erfolgt dadurch, dass die Zunge in eine mit Elastomermaterial überzogene Nut des Tragarms eingreift und somit eine wandartige Begrenzung in Form einer Anschlagfläche darstellt. Für den Zusammenbau des Aggregatlagers wird zunächst die elastomere Tragfeder in das Gehäuse eingesetzt und anschließend der Tragarm montiert. Hierzu wird ein die vorgenannte Nut aufweisender Endabschnitt des Tragarms in das Blechgehäuse um die Zunge herum hineingehebelt. Dabei ist ein Widerstand zu überwinden, der aus dem Zusammendrücken der elastomeren Tragfeder während des Hineinhebelns des Tragarms resultiert. DE 10 2010 043 165 A1 beschreibt ein Verfahren zur Montage eines Aggregatlagers mit den Merkmalen des Oberbegriffs des Anspruchs 1.

Aufgabe der Erfindung ist es, durch einen vereinfachten Zusammenbau und eine Materialeinsparung ein kostengünstiges und gleichzeitig leichtes Aggregatlager bereitzustellen.

Diese Aufgabe wird gemäß der vorliegenden Erfindung gelöst durch ein Verfahren zur Herstellung eines Aggregatlagers mit den Merkmalen des Anspruchs 1. Bevorzugte Ausführungsformen und Weiterbildungen sind Gegenstand der Unteransprüche.

Die Erfindung sieht demnach ein Verfahren zur Montage eines Aggregatlagers vor, insbesondere für ein Aggregatlager für ein Kraftfahrzeug. Das Aggregatlager weist ein geschlossenes, einteiliges Gehäuse mit jeweils einer Gehäuseöffnung an zwei gegenüberliegenden Seiten, eine in dem Gehäuse aufnehmbare elastomere Tragfeder sowie einen innerhalb des Gehäuses festlegbaren und zumindest mit einem Ende aus einer der beiden Gehäuseöffnungen herausragenden Tragarm auf. Die Erfindung schlägt vor, dass die elastomere Tragfeder bei zuvor montiertem Tragarm einsetzbar ist.
Das Aggregatlager kann als Motorlager zur schwingungsdämpfenden Lagerung eines Antriebsmotors, beispielsweise eines Verbrennungsmotors, als ein Getriebelager zur schwingungsdämpfenden Lagerung eines Gangwahlgetriebes oder als Lagerung für eine Motor-Getriebeeinheit ausgebildet sein.

Unter einem geschlossenen Gehäuse im Sinne der vorliegenden Erfindung ist dabei ein Gehäuse zu verstehen, das die elastomere Tragfeder und einen innerhalb des Gehäuses angeordneten Endabschnitt des Tragarms im Gegensatz zu aus dem Stand der Technik bekannten, beispielsweise bügel- oder Ω-förmig ausgebildeten, Gehäusen zumindest in einer Ebene unterbrechungsfrei umschließt. Mit einem einteilig ausgebildeten Gehäuse ist ein Gehäuse gemeint, das beim Zusammenbau des Aggregatlagers, also bei der Montage des Tragarms und beim anschließenden Einsetzen der elastomeren Tragfeder in das Gehäuse, einteilig ausgebildet ist. Das zum Zeitpunkt der Montage einteilig ausgebildete Gehäuse kann aus mehreren einzelnen Gehäuseteilen gebildet sein, die vor dem Zusammenbau des Aggregatlagers miteinander verbunden wurden. Die Verbindung ist dabei vorzugsweise als stoffschlüssige Verbindung ausgebildet, insbesondere als Schweiß- oder Lötverbindung. Vom Konstruktionsprinzip her kann das Gehäuse in Blech- oder Gussbauweise oder als Abschnitt eines Strangpressprofils ausgebildet sein.
Das Gehäuse kann Befestigungslaschen zur Befestigung des Aggregatlagers an einer Fahrzeugkarosserie, beispielsweise an einem Längsträger einer Fahrzeugkarosserie, oder einen Achsträger, der auch als Hilfsrahmen bezeichnet wird, aufweisen. Bei einer Ausbildung des Gehäuses in Blechbauweise sind die Befestigungslaschen aus Gründen der Gewichtseinsparung bevorzugt einlagig, also eine Blechstärke dick.

Der Tragarm, der auch als Bracket bezeichnet wird, kann aus Stahl, Aluminium oder Aluminiumgussmaterial oder aus Kunststoff, insbesondere aus faserverstärktem Spritzgusskunststoff mit Organoblech-Verstärkungseinlagen- oder auflagen, gebildet sein. Der innerhalb des Gehäuses angeordnete Endabschnitt des Tragarms ist komplett oder bereichsweise mit einem Elastomermaterial überzogen. Durch das Elastomermaterial werden Anschlagpuffer ausgebildet, die zusammen mit korrespondierenden Anschlagflächen auf der Innenseite des Gehäuses jeweils paarweise als Anschlagflächen ausgebildete Wegbegrenzungen in drei orthogonal zueinander angeordneten Erstreckungsrichtungen, und dabei jeweils in positiver und negativer Orientierung, darstellen, um bei Schwingungsbelastungen die Relativbewegung des Tragarms gegenüber dem Gehäuse zu begrenzen. Durch die Wegbegrenzung in drei orthogonal zueinander angeordneten Erstreckungsrichtungen handelt es sich bei dem Aggregatlager um ein Festlager. Bei den drei orthogonal zueinander angeordneten Erstreckungsrichtungen handelt es sich um eine Fahrzeuglängsrichtung, eine Fahrzeugquerrichtung und eine Fahrzeughochrichtung.

Der dem innerhalb des Gehäuses angeordneten Endabschnitt des Tragarms gegenüberliegende Endabschnitt des Tragarms ist mit dem zu dämpfenden Aggregat, beispielsweise dem Verbrennungsmotor, verbunden. Bei der Verbindung handelt es sich insbesondere um eine starre Verbindung, vorzugsweise eine Schraubverbindung.

Das Gehäuse weist eine schwertförmige Zunge auf, die sich in das Innere des Gehäuses erstreckt und die in eine formkorrespondierende Nut des Tragarms eingreift, um den Tragarm gegen ein Herausrutschen, insbesondere ein Herausrutschen in der Fahrzeugquerrichtung, aus einer der Gehäuseöffnungen zu sichern. Durch die zuvor beschriebene Anordnung ist der Tragarm formschlüssig innerhalb des Gehäuses festgelegt. Die Festlegung des Tragarms erfolgt dabei unmittelbar durch die geometrische Ausbildung des Gehäuses. Zusätzliche weitere Befestigungsmittel sind nicht erforderlich.

Die elastomere Tragfeder und das Elastomermaterial, das den innerhalb des Gehäuses angeordneten Endabschnitt des Tragarms komplett oder bereichsweise umgibt, berühren sich innerhalb des Gehäuses unter Ausbildung einer gemeinsamen Kontaktfläche. Eine stoffliche Verbindung zwischen der elastomeren Tragfeder und dem Elastomermaterial besteht nicht. Für die elastomere Tragfeder und das Elastomermaterial können in Abhängigkeit der Anforderungen an das Aggregatlager Werkstoffe gleicher oder unterschiedlicher Zusammensetzung und Eigenschaften verwendet werden.
Neben einer Ausführung mit einem innerhalb des Gehäuses angeordneten Endabschnitt des Tragarms kann das Aggregatlager auch einen durchgehenden, aus beiden Gehäuseöffnungen herausragenden Tragarm mit einem innerhalb des Gehäuses angeordneten Teilabschnitt aufweisen, der komplett oder bereichsweise mit dem Elastomermaterial überzogen ist. Das Gehäuse weist bei dieser Ausgestaltung wiederum eine schwertförmige Zunge auf, die sich in das Innere des Gehäuses erstreckt und die in eine formkorrespondierende Nut des innerhalb des Gehäuses angeordneten Teilabschnitts des Tragarms eingreift, um den Tragarm in dessen Lage zu fixieren. Ein derartig ausgebildeter Tragarm weist bevorzugt an seinen beiden Enden Bohrungen auf, die zur Befestigung des Tragarms an dem zu dämpfenden Aggregat mittels Befestigungsschrauben dienen.
Die Innenseite des Gehäuses bildet mit der elastomeren Tragfeder eine gemeinsame, wannenförmige Kontaktfläche aus. Dadurch ist die elastomere Tragfeder formschlüssig innerhalb des Gehäuses festgelegt und somit gegen ein Herausfallen gesichert.

Vorteilhaft ist die elastomere Tragfeder bei zuvor montiertem Tragarm durch eine erste der beiden Gehäuseöffnungen in das Gehäuse einsetzbar, wobei der Tragarm nicht oder nur geringfügig aus der ersten Gehäuseöffnung herausragt.
Durch diese Anordnung wird die Montage des Aggregatlagers gegenüber dem Stand der Technik vereinfacht, weil der die Nut aufweisende Endabschnitt des Tragarms nicht um die schwertförmige Zunge herum und gegen den Widerstand der zusammengedrückten elastomeren Tragfeder in das Gehäuse hineingehebelt werden muss. Damit dies möglich ist, ist die erste Gehäuseöffnung derart ausgebildet, dass die elastomere Tragfeder durch diese erste Gehäuseöffnung bei zuvor montiertem Tragarm in das Gehäuse eingesetzt werden kann. Auf diese Weise können die für die Montage des Aggregatlagers erforderlichen Kräfte reduziert werden. Darüber hinaus kann eine Montagevorrichtung zur Montage einfacher und somit günstiger ausgelegt werden, weil ein durch das Hineinhebeln, das auch als Einfädeln bezeichnet wird, des Tragarms bedingter apparativer Aufwand entfällt. Durch eine gegenüber dem Stand der Technik vergrößerte erste Gehäuseöffnung wird eine in Form von Gravuren auf die elastomere Tragfeder aufgebrachte Kennzeichnung besser sichtbar. Durch die gegenüber dem Stand der Technik vergrößerte erste Gehäuseöffnung wird darüber hinaus das Volumen wannenförmiger, schöpfender Geometriebereiche innerhalb des Gehäuses reduziert. Unter schöpfenden Geometriebereichen sind dabei Hohlräume oder Konturen zu verstehen, in denen sich bei im Wesentlichen waagerecht stehendem Kraftfahrzeug Flüssigkeit, insbesondere Wasser, sammeln kann. In diesen schöpfenden Geometriebereichen sammelt sich häufig Spritzwasser, beispielsweise, wenn das Aggregatlager als in einem relativ geringen Abstand zu einer Fahrbahn montiertes Motor- oder Getriebelager ausgebildet ist. Auch Wasser aus überschwemmten Straßen oder Pfützen kann sich im Fahrbetrieb in den schöpfenden Geometriebereichen sammeln. Während einer Motorwäsche kann sich darüber hinaus ebenfalls Wasser in den schöpfenden Geometriebereichen der Aggregatlager sammeln, welche an höher gelegenen Verbauorten im Kraftfahrzeug montiert sind.

Wenn in den schöpfenden Geometriebereichen angesammeltes Wasser gefriert, führt dies häufig zu einem signifikant verschlechterten Dämpfungs- und Akustikverhalten des Aggregatlagers, das darüber hinaus durch ein Gefrieren des Wassers und die damit verbundene Ausdehnung beschädigt oder sogar unbrauchbar werden kann.

Bevorzugt weist die elastomere Tragfeder im Zusammenbauzustand eine Vorspannung auf.
Die Vorspannung wird dadurch realisiert, dass ein im Zusammenbauzustand, also bei komplett montiertem Aggregatlager, für die elastomere Tragfeder zur Verfügung stehender Bauraum kleiner ist als das korrespondierende Volumen der elastomeren Tragfeder in entspanntem Zustand. Durch die Vorspannung wird erreicht, dass das Aggregatlager nach dem Einbau im Kraftfahrzeug und unter der dann auf die einzelnen Bauteile des Aggregatlagers einwirkenden Gewichtskraft des zu dämpfenden Aggregats die geforderten Dämpfungseigenschaften aufweist. Nach erfolgter Montage des Aggregatlagers und vor dem Verbau im Kraftfahrzeug wird durch die Vorspannung eine Berührung des Gehäuses und des Tragarms während des Transports und eine möglicherweise daraus resultierende Oberflächenbeschädigung der Bauteile vermieden. Darüber hinaus wird durch die Vorspannung vermieden, dass die einzelnen Bauteile des Aggregatlagers während des Transports separiert werden. Durch die Vorspannung wird bewirkt, dass keine weiteren Verbindungselemente wie Niete oder Schrauben erforderlich sind, um den innerhalb des Gehäuses angeordneten Endabschnitt des Tragarms nach dessen Montage in Position zu halten.

In vorteilhafter Weise ist die elastomere Tragfeder durch eine zweite der beiden Gehäuseöffnungen, bei zuvor montiertem und aus dieser herausragendem Tragarm, in das Gehäuse einsetzbar.
Diese Ausgestaltung bietet den Vorteil, dass der der elastomeren Tragfeder zugewandte und aus der zweiten Gehäuseöffnung herausragende Abschnitt des Tragarms während des Einsetzens der elastomeren Tragfeder eine Führungsfläche und damit eine Einführhilfe darstellt.

Gemäß einer Weiterbildung ist die elastomere Tragfeder segmentiert mit zumindest zwei Trennflächen ausgebildet.
Unter einer segmentiert ausgebildeten elastomeren Tragfeder ist im Zusammenhang mit der vorliegenden Erfindung eine elastomere Tragfeder zu verstehen, die im Gegensatz zu einer Vollblockfeder in mehrere Segmente unterteilt ist. Die zumindest zwei Trennflächen stellen im Zusammenbauzustand innenliegende Flächen und keine Außenflächen der elastomeren Tragfeder dar und sind zueinander formkorrespondierend ausgebildet. Im Zusammenbauzustand liegen die zumindest zwei Trennflächen spaltfrei und im Wesentlichen vollflächig aneinander an. Jeweils zwei Trennflächen bilden eine Trennung. Eine segmentiert ausgebildete Tragfeder mit zwei Segmenten weist demnach eine Trennung mit zwei Trennflächen auf, von denen jedem der beiden Segmente eine Trennfläche zugeordnet ist. Die Segmente, die senkrecht zu den Trennflächen vorteilhaft identische Querschnittsflächen aufweisen, sind dabei an jeweils einem ihrer Enden unter Ausbildung eines gemeinsamen Verbindungssteges miteinander verbunden. An den jeweils gegenüberliegenden Enden sind die Segmente in ihrem entspannten, nicht eingebauten Zustand voneinander abgespreizt. Die zumindest zwei Trennflächen können eben oder uneben ausgebildet sein. Die Herstellung der elastomeren Tragfeder erfolgt in der Regel in einem Spritzgießprozess mit einer anschließenden Vulkanisation, wobei unter Vulkanisation, auch Vernetzung genannt, ein chemischer Prozess zu verstehen ist, in dessen Verlauf sich Kautschukmolekülketten untereinander verknüpfen. Durch die Vulkanisation wird dem Elastomermaterial der elastomeren Tragfeder eine bleibende Gummi-Elastizität verliehen. Die Vulkanisation erfolgt dadurch, dass dem spritzgegossenen Elastomermaterial der elastomeren Tragfeder über einen gewissen Zeitraum, auch Heizzeit genannt, Wärme zugeführt wird. Aufgrund einer relativ schlechten Wärmeleitfähigkeit des Elastomermaterials ist eine relativ lange Heizzeit erforderlich. Durch die segmentierte Ausbildung der elastomeren Tragfeder wird deren Oberfläche und damit die für eine Wärmeeinleitung in die elastomere Tragfeder zur Verfügung stehende Oberfläche vergrößert. Auf diese Weise ergeben sich gegenüber einer als Vollblockfeder ausgebildeten elastomeren Tragfeder Vorteile in Bezug auf eine wirtschaftliche Herstellung, weil die Heizzeit aufgrund der vergrößerten Oberfläche der elastomeren Tragfeder reduziert werden kann.

Zweckmäßig erstrecken sich die zumindest zwei Trennflächen in einer Fahrzeughochrichtung.
Der Verbindungssteg kann dabei, in der Fahrzeughochrichtung betrachtet, oben oder unten angeordnet sein. Durch Versuche wurde bestätigt, dass sich eine elastomere Tragfeder mit zumindest zwei, sich in der Fahrzeughochrichtung erstreckenden Trennflächen bei Belastung im Wesentlichen gleich verhält wie eine Vollblockfeder mit gleichen Abmessungen. Trägt man einen Einfederungsweg, der sich bei Belastung der elastomeren Tragfeder mit einer entgegen der Fahrzeughochrichtung wirkenden Kraft ergibt, in ein entsprechendes Kraft-Weg-Diagramm ein, so ergibt sich für eine als Vollblockfeder und eine als elastomere Tragfeder mit zumindest einer Trennebene ausgebildete, elastomere Tragfeder im Wesentlichen eine identische Charakteristik, auch Kennung genannt. Dies liegt darin begründet, dass sich die bei Belastung der elastomeren Tragfeder senkrecht auf die Trennebene einwirkenden Kraftanteile der einzelnen Segmente gegeneinander aufheben, weil sie vom Betrag her gleich groß sind und jeweils in entgegengesetzter Richtung wirken. Daraus folgt, dass die Ausbildung mit zumindest zwei sich in der Fahrzeughochrichtung erstreckender Trennflächen im Rahmen der Segmentierung der elastomeren Tragfeder nahezu keinen Einfluss auf die Kennung, und damit auf die Funktion, der elastomeren Tragfeder hat.

Vorteilhaft ist die Gehäuseöffnung, durch die die elastomere Tragfeder bei zuvor montiertem Tragarm einsetzbar ist, trapezförmig und in der Fahrzeughochrichtung breiter werdend ausgebildet.
Bei dieser Ausführung wirken seitliche, in der Fahrzeughochrichtung breiter werdende Wandungen eines ersten, in Bezug auf die Fahrzeughochrichtung, unteren Gehäuseteils als Zugstreben, wenn die seitlichen Wandungen an deren, wiederum in Bezug auf die Fahrzeughochrichtung, oberen Enden durch eine Schweiß- oder Lötverbindung an ein zweites Gehäuseteil angebunden sind. Die Befestigungslaschen zur Befestigung des Aggregatlagers sind dabei einlagig durch das zweite Gehäuseteil ausgebildet. Durch die zuvor beschriebene Ausbildung und Anbindung der Wandungen des ersten Gehäuseteils ist eine sichere Einleitung der bei Schwingungsbelastungen in dieses eingetragenen Kräfte in das zweite Gehäuseteil gewährleistet. Bei einer trapezförmig und in der Fahrzeughochrichtung breiter werdenden Ausbildung der Gehäuseöffnung besteht die Gefahr einer Beschädigung, beispielsweise durch eine ungewollte Verformung, wenn das erste und das zweite Gehäuseteil nicht, wie zuvor beschrieben, durch Schweißen oder Löten miteinander verbunden sind, sondern statt dessen doppellagige Befestigungslaschen zur Anbindung des Aggregatlagers aufweisen.

Alternativ ist die Gehäuseöffnung, durch die die elastomere Tragfeder bei zuvor montiertem Tragarm einsetzbar ist, in Form eines in der Fahrzeughochrichtung offenen Kreisabschnitts mit verrundeten Übergängen ausgebildet.
Diese Ausführungsform zeichnet sich durch einen besonders günstigen Spannungsverlauf in dem die elastomere Tragfeder aufnehmenden Gehäuseteil aus.
Durch den stetigen Konturverlauf des Kreisabschnitts können bei einer Schwingungsbelastung des Aggregatlagers in dem aufnehmenden Gehäuseteil, speziell im Bereich der Gehäuseöffnung, auftretende mechanische Spannungen innerhalb der werkstoffabhängigen, zulässigen Grenzen gehalten werden. Durch schroffe Konturübergänge bedingte Spannungsspitzen werden vermieden.

In vorteilhafter Weise ist das Gehäuse einstückig ausgebildet.
Die einstückige Ausbildung des Gehäuses bietet den Vorteil, dass ein Fügen mehrerer vorab separat hergestellter Gehäuseteile, beispielsweise durch Schweißen oder Löten, entfallen kann. Für eine Umsetzung der einstückigen Ausbildung des Gehäuses bietet sich eine Auslegung des Gehäuses in Blechbauweise an. Als Ausgangsmaterial hierfür kann ein metallischer Rohrabschnitt eingesetzt werden, welcher in einem Hydroformingverfahren zu dem einstückigen Gehäuse in Blechbauweise geformt wird. Unter dem Hydroformingverfahren, das auch als Innenhochdruckumformverfahren bezeichnet wird, ist in diesem Zusammenhang ein spanloses Umformverfahren zu verstehen, bei welchem der metallische Rohrabschnitt in einem geschlossenen Formwerkzeug zu dem einstückigen Gehäuse geformt wird. Die Formgebung erfolgt dabei mittels eines Innendrucks, der über ein Wirkmedium, beispielsweise eine Wasser-Öl-Emulsion, auf eine Innenoberfläche der Wandung des Rohrabschnitts ausgeübt wird und der dadurch bewirkt, dass sich die Wandung des Rohrabschnitts an eine Formkontur des Formwerkzeugs anlegt, die der Außenkontur des einstückig ausgebildeten Gehäuses entspricht. Auf diese Weise lassen sich im Hydroformingverfahren Formkonturen erzeugen, die alternativ nur in bedeutend aufwändigeren Herstellungsverfahren realisierbar sind, wie beispielsweise einem Urformen mit sog. verlorenen Formen.

Gemäß einer alternativen Ausgestaltung ist das Gehäuse aus mehreren Gehäuseteilen in Mischbauweise ausgebildet, wobei zumindest ein Gehäuseteil aus der Gruppe Blechumformteil, Gussteil oder Strangpressteil und zumindest ein anderes Gehäuseteil aus einer anderen Teileart derselben Gruppe gebildet ist.
Mit Mischbauweise ist in diesem Zusammenhang gemeint, dass das Gehäuse aus mehreren Gehäuseteilen gebildet ist, die unterschiedlichen Teilearten zugeordnet sind, wobei als Teileart Blechumformteile, Gussteile oder Strangpressteile in Frage kommen. Für Teileart wird häufig auch der Begriff Teilefamilie verwendet. Durch die Mischbauweise ist es möglich, für jedes Gehäuseteil in Abhängigkeit von den jeweiligen Anforderungen die günstigste Teileart auszuwählen. Die einzelnen Gehäuseteile können dabei durch stoffschlüssige Fügeverfahren wie z. B. Schweißen oder mittels Formschluss z. B. durch formschlüssig ineinandergreifende Konturbereiche miteinander verbunden werden. In einem Gehäuse können neben stoffschlüssigen auch formschlüssige Verbindungen realisiert sein.

Erfindungsgemäß hat nach dem Einlegen des Tragarms in das Gehäuse der Tragarm seine endgültige Zusammenbauposition eingenommen. Die schwertförmige Zunge, die Bestandteil des Gehäuses ist und die sich in das Innere des Gehäuses erstreckt, greift in die formkorrespondierende Nut des Tragarms ein und verhindert auf diese Weise eine Verschiebung des Tragarms, insbesondere eine Verschiebung in der Fahrzeugquerrichtung.
Es ist vorteilhaft, im Rahmen der Montage des Aggregatlagers zunächst den Tragarm innerhalb des Gehäuses in dessen Zusammenbauposition zu bringen, weil die formkorrespondierende Nut des Tragarms auf diese Weise ohne besonderen Kraftaufwand mit der schwertförmigen Zunge des Gehäuses in formschlüssigen Eingriff gebracht werden kann. Durch die vorgenannten, aufeinanderfolgenden Verfahrensschritte wird die Montage des Aggregatlagers gegenüber dem Stand der Technik vereinfacht, weil der Tragarm nicht um die schwertförmige Zunge herum und gegen den Widerstand der zusammengedrückten elastomeren Tragfeder in das Gehäuse hineingehebelt werden muss, um die schwertförmige Zunge und die formkorrespondierende Nut in Eingriff zu bringen.

Vorteilhaft wird der Tragarm derart in das Gehäuse eingelegt, dass dieser sich durch dessen Eigengewicht an einen formkorrespondierenden Bereich einer Innenwandung des Gehäuses anlegt.
Der formkorrespondierende Bereich der Innenwandung des Gehäuses beinhaltet insbesondere eine Anschlagfläche zur Begrenzung der Bewegung des Tragarms in einer Orientierung der Fahrzeughochrichtung. Es hat sich als günstig herausgestellt, dabei das Gehäuse derart auszurichten, dass die schwertförmige Zunge während der Montage nach oben weist und der Tragarm nach dem Einlegen in das Gehäuse somit durch dessen Eigengewicht an dem formkorrespondierenden Bereich der Innenwandung des Gehäuses anliegt. Diese Ausrichtung des Gehäuses zur Vereinfachung der Montage ist gegenüber der Ausrichtung des Gehäuses in Einbaulage im Kraftfahrzeug um 180° gedreht.
Durch die Anlage des Tragarms an den formkorrespondierenden Bereich der Innenwandung des Gehäuses wird ein größtmöglicher Querschnitt für das nachfolgende Einsetzen der elastomeren Tragfeder in das Gehäuse bereitgestellt. Da der Tragarm durch dessen Eigengewicht in dieser Position gehalten wird, kann in einer Vorrichtung zur Montage des Aggregatlagers auf aufwendige Positioniereinrichtungen verzichtet werden.

Im Folgenden wird die Erfindung anhand lediglich ein Ausführungsbeispiel darstellender Zeichnungen näher erläutert. Dabei zeigt:
Fig. 1: eine perspektivische Darstellung einer Ausführungsform eines Aggregatlagers;
Fig. 2: eine perspektivische Darstellung des Aggregatlagers gemäß Fig. 1 aus einer anderen Betrachtungsrichtung und in einem Viertelschnitt;
Fig. 3: eine perspektivische Darstellung des Aggregatlagers gemäß Fig. 1 aus einer weiteren Betrachtungsrichtung, ebenfalls in einem Viertelschnitt;
Fig. 4: eine Schnittdarstellung des Aggregatlagers gemäß Fig. 1 entlang der Schnittebene I - I; und
Fig. 5: eine weitere Schnittdarstellung des Aggregatlagers gemäß Fig. 1 entlang der Schnittebene II - II, wobei von dem Aggregatlager lediglich eine elastomere Tragfeder dargestellt ist.

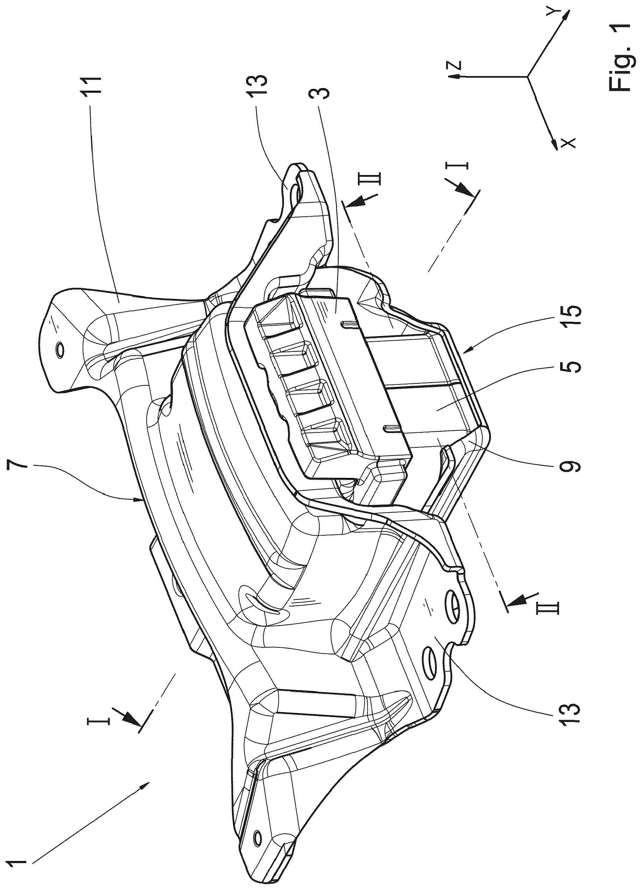

Fig. 1 zeigt ein Aggregatlager 1, welches einen Tragarm 3 und eine elastomere Tragfeder 5 aufweist. Der Tragarm 3, der mit einem Ende an einen Verbrennungsmotor angebunden ist, weist eine Längserstreckung in einer, bezogen auf ein Fahrzeugkoordinatensystem, Fahrzeugquerrichtung Y auf.
Das Fahrzeugkoordinatensystem ist ein dreidimensionales, rechtshändiges Koordinatensystem, das die Lage aller Fahrzeugteile bezüglich eines Fahrzeugnullpunkts definiert, der bei Kraftfahrzeugen in der Mitte einer gedachten Linie zwischen den Mittelpunkten beider Vorderräder liegt. Jeweils orthogonal zu der Fahrzeugquerrichtung Y und orthogonal untereinander erstrecken sich eine Fahrzeuglängsrichtung X und eine Fahrzeughochrichtung Z. Die Pfeile in dem in Fig. 1 dargestellten Koordinatensystem deuten jeweils die positive Orientierung der drei vorgenannten Richtungen an, wobei die positive Orientierung der Fahrzeuglängsrichtung X einer Fahrtrichtung entspricht. Das in Fig. 1 dargestellte Koordinatensystem mit den dort angegebenen Richtungsfestlegungen gilt durchgängig für sämtliche Zeichnungsfiguren.
Der Tragarm 3 und die elastomere Tragfeder 5 werden in einer von der Fahrzeuglängsrichtung X und der Fahrzeughochrichtung Z aufgespannten Ebene von einem Gehäuse 7 umschlossen. Das Gehäuse 7 wird in der vorliegenden Ausführungsform durch ein erstes Gehäuseteil 9 und ein zweites Gehäuseteil 11 gebildet, wobei beide Gehäuseteile 9, 11 als durch einen Tiefziehprozess hergestellte Blechumformteile ausgebildet sind. Das zweite Gehäuseteil 11 weist zwei Befestigungslaschen 13 zur Befestigung des Aggregatlagers 1 an einem Längsträger einer Fahrzeugkarosserie auf.
Das Gehäuse 7 des Aggregatlagers 1 weist für Schwingungsbewegungen, die von dem Verbrennungsmotor über den Tragarm 3 in das Aggregatlager 1 eingetragen werden, Wegbegrenzungen in den drei zuvor beschriebenen, orthogonal zueinander angeordneten Fahrzeugerstreckungsrichtungen X, Y, Z, und dabei jeweils in positiver und negativer Orientierung, auf. Bei dem Aggregatlager handelt es sich daher um ein sog. Festlager.
Unterhalb des Tragarms 3 ist innerhalb des Gehäuses 7 die elastomere Tragfeder 5 angeordnet. Um die elastomere Tragfeder 5 bei zuvor montiertem Tragarm 3 in das Gehäuse 7 einsetzen zu können, weist das Gehäuse 7 eine erste Gehäuseöffnung 15 auf. Die erste Gehäuseöffnung 15 stellt eine unterhalb des Tragarms 3 angeordnete Durchgangsfläche 17 bereit, die ein Einsetzen der elastomeren Tragfeder 5 bei zuvor montiertem Tragarm 3 ermöglicht. Die Durchgangsfläche 17 ist etwas kleiner als die korrespondierende Querschnittsfläche der entspannten elastomeren Tragfeder 5, die im Zuge der Montage des Aggregatlagers 1 nach Durchführung durch die Durchgangsfläche 17 in das Gehäuse 7 einzusetzen ist. Ebenso ist der für die elastomere Tragfeder 5 zur Verfügung stehende Bauraum innerhalb des Gehäuses 7 bei zuvor montiertem Tragarm 3 kleiner als das korrespondierende Volumen der elastomeren Tragfeder 5 in entspanntem Zustand. Auf diese Weise wird bewirkt, dass die elastomere Tragfeder im Zusammenbauzustand eine Vorspannung aufweist.

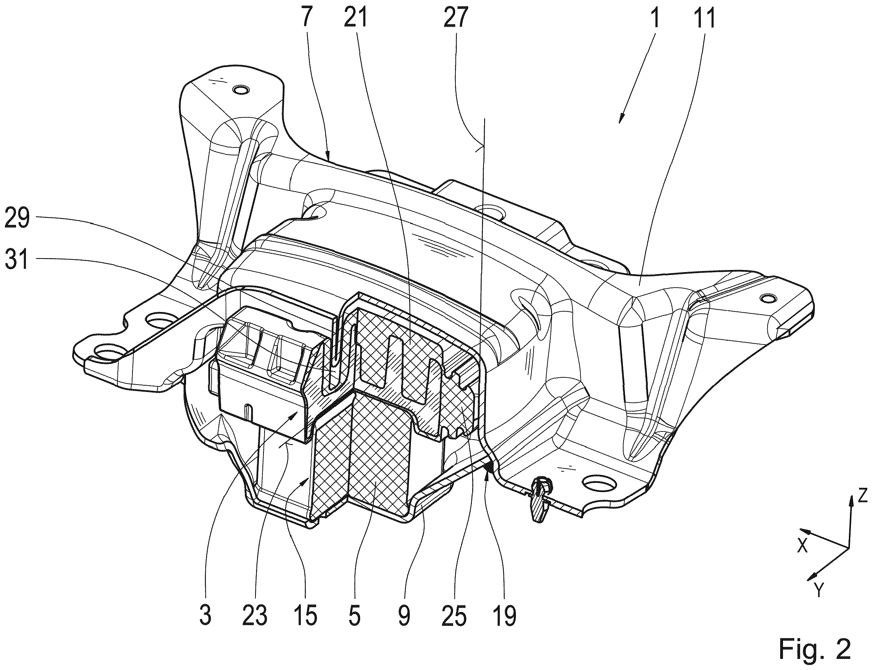

Wie aus Fig. 2 hervorgeht, sind das erste Gehäuseteil 9 und das zweite Gehäuseteil 11 durch eine Schweißverbindung 19 stoffschlüssig gefügt. Der Tragarm 3 weist einen metallischen Kern auf, der bereichsweise von einem Elastomermaterial 21 umgeben ist.
Die elastomere Tragfeder 5, die bei zuvor montiertem Tragarm 3 durch die erste Gehäuseöffnung 15 in das Gehäuse 7 eingesetzt wird, weist eine Kontaktfläche 23 zu dem Elastomermaterial 21 auf, welches den metallischen Kern des Tragarms 3 bereichsweise umgibt. Der Tragarm 3 und die elastomere Tragfeder 5 liegen im Bereich der gemeinsamen Kontaktfläche 23 lose aufeinander. Es besteht keine stoffliche Verbindung im Bereich dieser Kontaktfläche 23. Das Elastomermaterial 21, welches den metallischen Kern des Tragarms 3 bereichsweise umgibt, und das Material aus dem die elastomere Tragfeder 5 gebildet ist, unterscheiden sich voneinander. Es ist allerdings auch vorstellbar, gleiche Materialien zu verwenden. Im dem aufgeschnitten dargestellten Bereich des Aggregatlagers 1 ist ein erster Anschlagpuffer 25 dargestellt, der aus dem Elastomermaterial 21 gebildet ist, welches den metallischen Kern des Tragarms 3 bereichsweise umgibt. Der erste Anschlagpuffer 25 wirkt gemeinsam mit einer korrespondierenden ersten Anschlagfläche 27, welche auf der dem ersten Anschlagpuffer 25 zugewandten Innenseite des Gehäuses 7 angeordnet ist, als Wegbegrenzung für Schwingungsbewegungen des Tragarms 3 in negativer Fahrzeuglängsrichtung X, also in einer Richtung entgegengesetzt zur Fahrtrichtung.
Das zweite Gehäuseteil 11 weist eine schwertförmige Zunge 29 auf, die durch eine Abkantung gebildet wird und die sich in das Innere des Gehäuses 7 erstreckt. Die schwertförmige Zunge 29 greift in eine formkorrespondierende Nut 31 des Tragarms 3 und wirkt dadurch als Wegbegrenzung in Fahrzeugquerrichtung Y, und zwar in positiver und in negativer Orientierung.

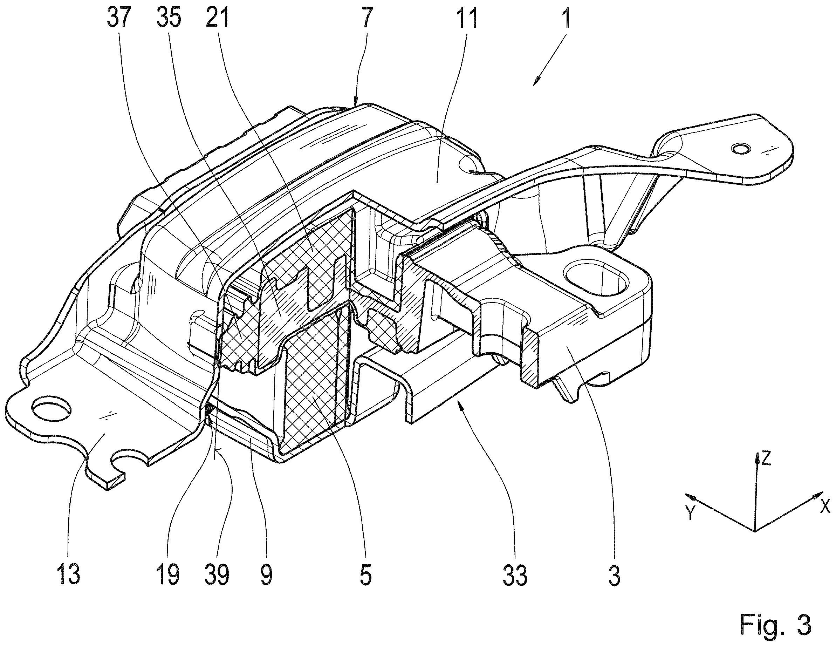

Die Montage des Tragarms 3 erfolgt durch eine in Fig. 3 dargestellte zweite Gehäuseöffnung 33, die auf der der ersten Gehäuseöffnung 15 gegenüberliegenden Seite des Gehäuses 7 angeordnet ist. Nach erfolgter Montage des Tragarms 3 ist dieser mit einem Endabschnitt 35, der vollumfänglich von dem Elastomermaterial 21 überzogen ist, im Wesentlichen innerhalb des Gehäuses 7 angeordnet. Unterhalb des Tragarms 3 ist die unter Vorspannung eingesetzte elastomere Tragfeder 5 angeordnet. Der gegenüberliegende Endabschnitt des Tragarms 3, der sich aus der zweiten Gehäuseöffnung 33 heraus in Fahrzeugquerrichtung Y erstreckt, ist durch Befestigungsschrauben starr mit dem zu dämpfenden Aggregat verbunden. Zur Aufnahme der Befestigungsschrauben weist dieser Endabschnitt des Tragarms 3 mehrere Langlöcher auf.
Das erste Gehäuseteil 9 ist durch die Schweißverbindung 19, die als eine Kehlnaht ausgebildet ist, an das zweite Gehäuseteil 11, von dem in der perspektivischen Ansicht gemäß Fig. 3 nur eine Befestigungslasche 13 erkennbar ist, angebunden.

Das Aggregatlager 1 weist zu dem ersten Anschlagpuffer 25 und zu der ersten Anschlagfläche 27 spiegelbildlich angeordnet einen zweiten Anschlagpuffer 37 und eine zweite Anschlagfläche 39 auf.

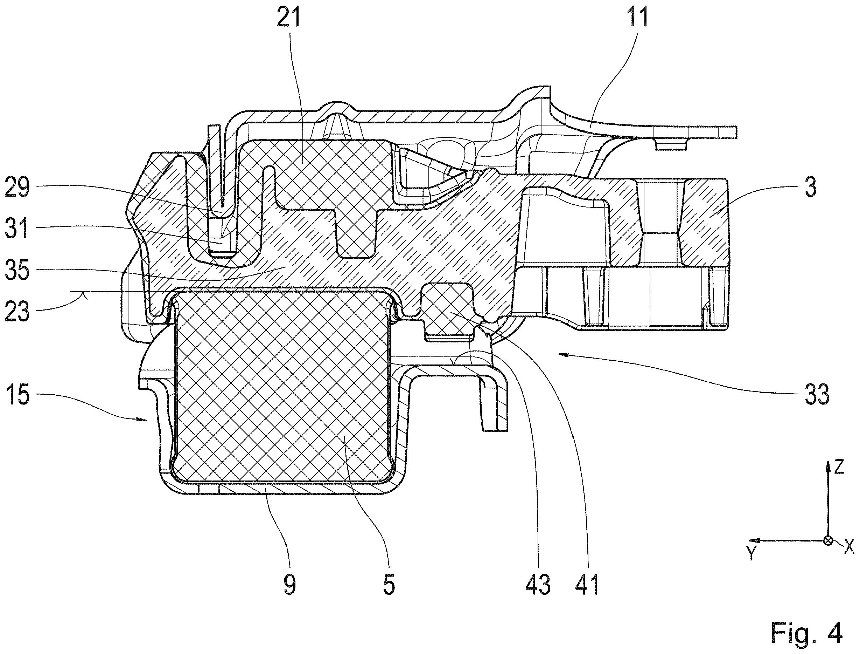

In dem in Fig. 4 dargestellten Koordinatensystem ist durch einen Kreis mit einbeschriebenem Diagonalkreuz angedeutet, dass sich die Fahrtrichtung, also die Fahrzeuglängsrichtung X in ihrer positiven Orientierung, in die Zeichenebene hinein erstreckt.
Das erste Gehäuseteil 9 nimmt die elastomere Tragfeder 5 auf, wobei der Bereich, in dem sich das erste Gehäuseteil 9 und die elastomere Tragfeder 5 berühren, derart ausgebildet ist, dass die elastomere Tragfeder 5 von dem ersten Gehäuseteil 9 teilweise umgriffen wird. Auf diese Weise ist sichergestellt, dass die elastomere Tragfeder 5 auch während des Fahrbetriebs nicht unzulässig aus der im Zusammenbauzustand eingenommenen Position verlagert wird. Gleiches gilt für die Kontaktfläche 23 zwischen der elastomeren Tragfeder 5 und dem Elastomermaterial 21, welches den innerhalb des Gehäuses 7 angeordneten Endabschnitt 35 des Tragarms 3 umgibt.
Die erste Gehäuseöffnung 15, durch die die elastomere Tragfeder 5 bei zuvor montiertem Tragarm 3 in das Gehäuse 7 eingesetzt wird, ist bezüglich der zweiten Gehäuseöffnung 33 auf der gegenüberliegenden Seite des Gehäuses 7 angeordnet. Durch das Elastomermaterial 21, welches den Tragarm 3 bereichsweise umgibt, wird ein dritter Anschlagpuffer 41 ausgebildet. Der dritte Anschlagpuffer 41 bildet mit einer dritten Anschlagfläche 43 eine Wegbegrenzung für Schwingungsbewegungen des Tragarms 3 in negativer Orientierung der Fahrzeughochrichtung Z, also zur Fahrbahn hin. Die dritte Anschlagfläche 43 ist auf der dem dritten Anschlagpuffer 41 zugewandten Innenwandung des ersten Gehäuseteils 9 angeordnet.
Die durch Abkanten eines Randabschnitts des zweiten Gehäuseteils 11 gebildete schwertförmige Zunge 29 greift in die formkorrespondierende Nut 31 des Tragarms 3, die mit dem Elastomermaterial 21 ausgekleidet ist, welches den innerhalb des Gehäuses 7 angeordneten Endabschnitt des Tragarms 3 umgibt.

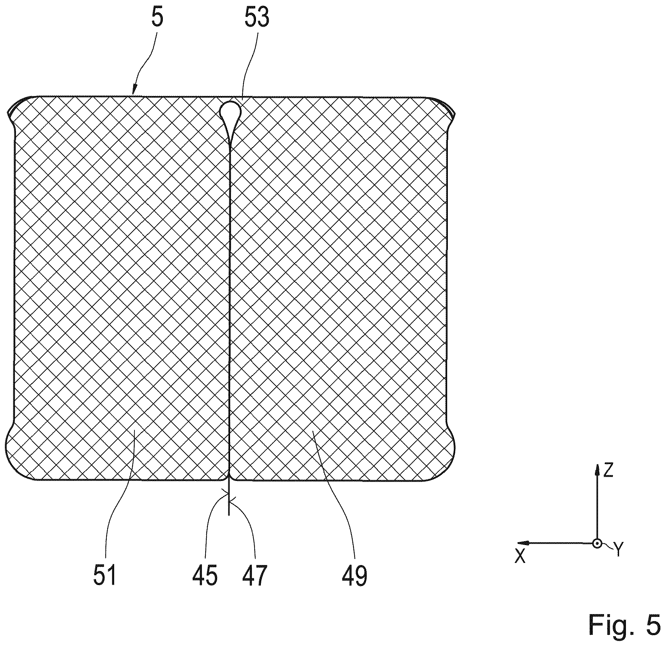

In dem in Fig. 5 dargestellten Koordinatensystem ist durch einen Kreis mit zentrisch angeordnetem Punkt angedeutet, dass sich die Fahrzeugquerrichtung Y in ihrer positiven Orientierung, aus der Zeichenebene heraus erstreckt.
Die elastomere Tragfeder 5 ist segmentiert ausgebildet und weist zwei im Wesentlichen vollflächig aneinander anliegende Trennflächen 45, 47 auf. Die beiden Trennflächen 45, 47, die sich in einer durch die Fahrzeugquerrichtung Y und die Fahrzeughochrichtung Z aufgespannten Ebene erstrecken, bilden eine innerhalb der elastomeren Tragfeder 5 angeordnete Trennung derselben. Die elastomere Tragfeder 5 weist zwei Segmente 49, 51 auf, die jeweils an einem ihrer Enden unter Ausbildung eines gemeinsamen Verbindungsstegs 53 miteinander verbunden sind. Der Verbindungssteg 53 bildet in seiner in der Fahrzeugquerrichtung Y verlaufenden Längserstreckung einen Teil einer Außenseite der elastomeren Tragfeder 5. Alternativ kann elastomere Tragfeder 5 auch mehr als zwei Segmente, beispielsweise vier Segmente gleicher Größe, aufweisen, wobei die sich dabei ergebenden Trennflächen bevorzugt ebenfalls in der Fahrzeughochrichtung Z erstrecken.
Die elastomere Tragfeder 5 kann darüber hinaus auch als Vollblockfeder ohne Trennflächen ausgebildet sein.

### Bezugszeichen

- 1: Aggregatlager
- 3: Tragarm
- 5: elastomere Tragfeder
- 7: Gehäuse
- 9: erstes Gehäuseteil
- 11: zweites Gehäuseteil
- 13: Befestigungslasche
- 15: erste Gehäuseöffnung
- 17: Durchgangsfläche
- 19: Schweißverbindung
- 21: Elastomermaterial
- 23: Kontaktfläche
- 25: erster Anschlagpuffer
- 27: erste Anschlagfläche
- 29: schwertförmige Zunge
- 31: Nut
- 33: zweite Gehäuseöffnung
- 35: Endabschnitt des Tragarms
- 37: zweiter Anschlagpuffer
- 39: zweite Anschlagfläche
- 41: dritter Anschlagpuffer
- 43: dritte Anschlagfläche
- 45: Trennfläche
- 47: Trennfläche
- 49: Segment
- 51: Segment
- 53: Verbindungssteg

- X: Fahrzeuglängsrichtung
- Y: Fahrzeugquerrichtung
- Z: Fahrzeughochrichtung

## Patentansprüche

1. Verfahren zur Montage eines Aggregatlagers (1), insbesondere für ein Kraftfahrzeug, das Aggregatlager (1) aufweisend ein geschlossenes, einteiliges Gehäuse (7) mit jeweils einer Gehäuseöffnung (15, 33) an zwei gegenüberliegenden Seiten, eine in dem Gehäuse (7) aufgenommene elastomere Tragfeder (5) sowie einen innerhalb des Gehäuses (7) festgelegten und zumindest mit einem Ende aus einer der beiden Gehäuseöffnungen (15, 33) herausragenden Tragarm (3), wobei das Gehäuse (7) eine schwertförmige Zunge (29) aufweist, die sich in das Innere des Gehäuses (7) erstreckt und in eine formkorrespondierende Nut (31) des Tragarms (3) eingreift, **dadurch gekennzeichnet, dass** der Tragarm (3) in das Gehäuse (7) eingelegt wird und nachfolgend die elastomere Tragfeder (5) in das Gehäuse eingesetzt wird.

2. Verfahren nach Anspruch 1, **dadurch gekennzeichnet, dass** die elastomere Tragfeder (5) bei zuvor montiertem Tragarm (3) durch eine erste (15) der beiden Gehäuseöffnungen (15, 33) in das Gehäuse (7) eingesetzt wird, wobei der Tragarm (3) nicht oder nur geringfügig aus der ersten Gehäuseöffnung (15) herausragt, dessen Montage durch eine zweite der Gehäuseöffnungen (33) erfolgt.

3. Verfahren nach Anspruch 1 oder 2, **dadurch gekennzeichnet, dass** die elastomere Tragfeder (5) im Zusammenbauzustand eine Vorspannung aufweist.

4. Verfahren nach einem der Ansprüche 1 bis 3, **dadurch gekennzeichnet, dass** die elastomere Tragfeder (5) segmentiert mit zumindest zwei Trennflächen (45, 47) ausgebildet ist.

5. Verfahren nach Anspruch 4, **dadurch gekennzeichnet, dass** sich die zumindest zwei Trennflächen (45, 47) in einer Fahrzeughochrichtung (Z) erstrecken.

6. Verfahren nach einem der Ansprüche 2 bis 5, **dadurch gekennzeichnet, dass** die Gehäuseöffnung (15, 33), durch die die elastomere Tragfeder (5) bei zuvor montiertem Tragarm (3) eingesetzt wird, trapezförmig und in der Fahrzeughochrichtung (Z) breiter werdend ausgebildet ist.

7. Verfahren nach einem der Ansprüche 2 bis 5, **dadurch gekennzeichnet, dass** die Gehäuseöffnung (15, 33), durch die die elastomere Tragfeder (5) bei zuvor montiertem Tragarm (3) eingesetzt wird, in Form eines in der Fahrzeughochrichtung (Z) offenen Kreisabschnitts mit verrundeten Übergängen ausgebildet ist.

8. Verfahren nach einem der vorhergehenden Ansprüche, **dadurch gekennzeichnet, dass** das Gehäuse (7) einstückig ausgebildet ist.

9. Verfahren nach einem der Ansprüche 1 bis 7, **dadurch gekennzeichnet, dass** das Gehäuse (7) aus mehreren Gehäuseteilen (9, 11) in Mischbauweise ausgebildet ist, wobei zumindest ein Gehäuseteil (9) aus der Gruppe Blechumformteil, Gussteil oder Strangpressteil und zumindest ein anderes Gehäuseteil (11) aus einer anderen Teileart derselben Gruppe gebildet ist.

10. Verfahren zur Montage eines Aggregatlagers (1) nach einem der vorhergehenden Ansprüche, **dadurch gekennzeichnet, dass** der Tragarm (3) derart in das Gehäuse (7) eingelegt wird, dass dieser sich durch dessen Eigengewicht an einen formkorrespondierenden Bereich einer Innenwandung des Gehäuses (7) anlegt.

11. Verfahren nach einem der vorhergehenden Ansprüche, **dadurch gekennzeichnet, dass** der formkorrespondierende Bereich der Innenwandung des Gehäuses (7) eine Anschlagfläche zur Begrenzung der Bewegung des Tragarms (3) in einer Orientierung der Fahrzeughochrichtung (z) beinhaltet.

12. Verfahren nach einem der vorhergehenden Ansprüche, **dadurch gekennzeichnet, dass** das Gehäuse (7) zur Montage derart ausgerichtet wird, dass es gegenüber der Ausrichtung des Gehäuses (7) in Einbaulage im Kraftfahrzeug um 180° gedreht ist, sodass die schwertförmige Zunge (29) während der Montage nach oben weist und der Tragarm (3) nach dem Einlegen in das Gehäuse (7) somit durch dessen Eigengewicht an dem oder einem formkorrespondierenden Bereich der Innenwandung des Gehäuses (7) anliegt.

## Claims

1. Method for installing a unit bearing (1), in particular for a motor vehicle, the unit bearing (1) having a closed, one-part housing (7) with respectively one housing opening (15, 33) at two opposing sides, an elastomer support spring (5) received in the housing (7) and a support arm (3) fixed inside the housing (7) and protruding at least with one end from one of the two housing openings (15, 33), wherein the housing (7) has a blade-shaped tab (29) which extends into the interior of the housing (7) and engages into a correspondingly-shaped groove (31) of the support arm (3), **characterised in that** the support arm (3) is laid into the housing (7) and the elastomer support spring (5) is then inserted into the housing.

2. Method according to claim 1, **characterised in that** the elastomer support spring (5) is inserted into the housing (7) through a first (15) of the two housing openings (15, 33) in the case of a previously-installed support arm (3), wherein the support arm (3) does not protrude or protrudes only slightly out of the first housing opening (15), whose installation takes place through a second of the housing openings (33).

3. Method according to claim 1 or 2, **characterised in that** the elastomer support spring (5) has a pretensioning in the assembled state.

4. Method according to any one of claims 1 to 3, **characterised in that** the elastomer support spring (5) is designed segmented with at least two separating surfaces (45, 47).

5. Method according to claim 4, **characterised in that** the at least two separating surfaces (45, 47) extend in a vehicle vertical direction (Z).

6. Method according to any one of claims 2 to 5, **characterised in that** the housing opening (15, 33), through which the elastomer support spring (5) is inserted in the case of a previously-installed support arm (3), is designed in a trapezoid shape and so as to become wider in the vehicle vertical direction (Z).

7. Method according to any one of claims 2 to 5, **characterised in that** the housing opening (15, 33), through which the elastomer support spring (5) is inserted in the case of a previously-installed support arm (3), is designed in the shape of a circular section open in the vehicle vertical direction (Z) with rounded transitions.

8. Method according to any one of the preceding claims, **characterised in that** the housing (7) is designed in one part.

9. Method according to any one of claims 1 to 7, **characterised in that** the housing (7) is designed from a plurality of housing parts (9, 11) in a mixed design, wherein at least one housing part (9) is formed from the group of sheet formed part, cast part or extruded part and at least one other housing part (11) from another part type of the same group.

10. Method for installing a unit bearing (1) according to any one of the preceding claims, **characterised in that** the support arm (3) is laid into the housing (7) such that it abuts on a correspondingly-shaped region of an inner wall of the housing (7) due to its own weight.

11. Method according to any one of the preceding claims, **characterised in that** the correspondingly-shaped region of the inner wall of the housing (7) contains a stop surface to delimit the movement of the support arm (3) in an orientation of the vehicle vertical direction (z).

12. Method according to any one of the preceding claims, **characterised in that** the housing (7) is aligned for installation such that it is rotated by 180° with respect to the alignment of the housing (7) in the installation position in the motor vehicle such that the blade-shaped tab (29) points upwards during the installation and the support arm (3) therefore abuts on the or a correspondingly-shaped region of the inner wall of the housing (7) due to its own weight after being laid into the housing (7).

## Revendications

1. Procédé de montage d'un support d'organe mécanique (1), en particulier pour un véhicule automobile, le support d'organe mécanique (1) comportant un carter (7) d'une seule pièce, fermé, avec respectivement une ouverture de carter (15, 33) sur deux côtés opposés, un ressort porteur (5) en élastomère logé dans le carter (7), ainsi qu'un bras porteur (3) immobilisé à l'intérieur du carter (7) et dépassant, au moins par une extrémité, d'une des deux ouvertures de carter (15, 33), le carter (7) comportant une languette (29) en forme d'épée qui s'étend dans l'intérieur du carter (7) et engrène dans une rainure (31), de forme correspondante, du bras porteur (3), **caractérisé en ce que** le bras porteur (3) est inséré dans le carter (7) et ensuite le ressort porteur (5) en élastomère est introduit dans le carter

2. Procédé selon la revendication 1, **caractérisé en ce que** le ressort porteur (5) en élastomère, quand le bras porteur (3) a été monté préalablement, est introduit dans le carter (7) à travers une première (15) des deux ouvertures de carter (15, 33), le bras porteur (3) ne dépassant pas, ou seulement peu, de la première ouverture de carter (15), dont le montage s'effectue à travers une deuxième des ouvertures de carter (33).

3. Procédé selon la revendication 1 ou 2, **caractérisé en ce que**, dans l'état assemblé, le ressort porteur (5) en élastomère présente une pré-tension.

4. Procédé selon l'une des revendications 1 à 3, **caractérisé en ce que** le ressort porteur (5) en élastomère est constitué de façon segmentée, avec au moins deux surfaces de séparation (45, 47).

5. Procédé selon la revendication 4, **caractérisé en ce que** les au moins deux surfaces de séparation (45, 47) s'étendent dans une direction de la hauteur du véhicule (Z).

6. Procédé selon l'une des revendications 2 à 5, **caractérisé en ce que** l'ouverture de carter (15, 33) à travers laquelle le ressort porteur (5) en élastomère est introduit quand le bras porteur (3) a été monté préalablement est de forme trapézoïdale et est constituée en s'élargissant dans la direction de la hauteur du véhicule (Z).

7. Procédé selon l'une des revendications 2 à 5, **caractérisé en ce que** l'ouverture de carter (15, 33) à travers laquelle le ressort porteur (5) en élastomère est introduit quand le bras porteur (3) a été monté préalablement est constituée sous la forme d'un segment de cercle ouvert dans la direction de la hauteur du véhicule (Z), avec des transitions arrondies.

8. Procédé selon l'une des revendications précédentes, **caractérisé en ce que** le carter (7) est constitué d'une seule pièce.

9. Procédé selon l'une des revendications 1 à 7, **caractérisé en ce que** le carter (7) est constitué de plusieurs parties de carter (9, 11) en construction mixte, au moins une partie de carter (9) étant formée à partir du groupe pièce de formage, pièce de fonderie ou pièce d'extrusion, et au moins une autre partie de carter (11) étant formée à partir d'un autre type de pièce du même groupe.

10. Procédé de montage d'un support d'organe mécanique (1) selon l'une des revendications précédentes, **caractérisé en ce que** le bras porteur (3) est inséré dans le carter (7) de telle sorte que ce bras s'appuie, du fait de son poids propre, contre une zone de forme correspondante d'une paroi intérieure du carter (7).

11. Procédé selon l'une des revendications précédentes, **caractérisé en ce que** la zone de forme correspondante de la paroi intérieure du carter (7) contient une surface de butée destinée à limiter le mouvement du bras porteur (3) dans une orientation de la direction de la hauteur du véhicule (z).

12. Procédé selon l'une des revendications précédentes, **caractérisé en ce que**, pour le montage, le carter (7) est agencé de telle sorte qu'il est tourné de 180° par rapport à l'orientation du carter (7) en position de montage dans le véhicule automobile, de telle sorte que la languette (29) en forme d'épée est dirigée vers le haut pendant le montage et, après l'insertion dans le carter (7), le bras porteur (3) est ainsi, du fait de son poids propre, adjacent à la ou à une zone de forme correspondante de la paroi intérieure du carter (7).
